# EUROPEAN PATENT SPECIFICATION

(11) **EP 3 795 872 B1**
(45) Date of publication and mention of the grant of the patent: **24.11.2021**
(21) Application number: 20199200.5
(22) Date of filing: 28.08.2019
(51) Int. Cl.: F16K 11/087

(54) **DISTRIBUTION MANIFOLD FOR A FLUID**
VERTEILER FÜR EINE FLÜSSIGKEIT
COLLECTEUR DE DISTRIBUTION D'UN FLUIDE

(30) Priority: 06.09.2018 IT 201800008399
(43) Date of publication of application: 24.03.2021
(62) Divisional of application: 19193993.3
(73) Proprietor: FIMCIM S.P.A., 20121 Milano (MI) (IT)
(72) Inventor: CIMBERIO, Roberto, 28010 AMENO FRAZ. VACCIAGO (NO) (IT); GUIDETTI, Tiziano, 28021 BORGOMANERO (NO) (IT)
(74) Representative: PGA S.p.A.

(56) References cited:
- EP-A1- 3 332 855
- DE-A1- 4 103 976
- FR-A1- 3 060 698

## Description

### Field of the invention

The present invention relates to a distribution manifold for a fluid, in particular a liquid, preferably water.

The manifold according to the present invention can be used in hydraulic/thermal systems, for example air conditioning and/or heating, of a domestic and/or industrial type.

The manifold according to the present invention can be used to control the flow rate of fluid flowing through a fluid treatment device, such as for example a filter or a particle separator, or a device using the fluid, such as a radiator, for example or, more generally, a heat exchanger.

### Prior art

The fluid circulating in a heating and/or conditioning heating system typically drags a quantity of solid particles due to either dirt present or formed in the same fluid, and to metallic and non-metallic particles that are formed by the internal corrosion of pipes and/or that come from other equipment present in the system.

These particles tend to accumulate inside the operating devices of the system, for example pumps, valves and exchangers, with consequent alteration in the operation of the same devices. The accumulation of these particles can uncontrollably alter the design parameters of the system, reducing the overall efficiency thereof or even causing it to break down.

To overcome these drawbacks, water treatment devices have been developed such as filters and/or solid particle separators. A solid particle separator is for example described in the document EP3150266 on behalf of the same Applicant.

Known water treatment devices are provided with water distribution systems that can be positioned in different configurations to allow water to pass through the filter to bypass it or to close the conduit on which the device is arranged.

For example, public document EP3332855 illustrates a filtration and separation device comprising a main body having an inlet conduit configured to receive a flow of water entering the device and an outlet conduit configured to receive a water flow exiting from the device; a filter cartridge housed in a cup-shaped container; a flow diverter valve. The flow diverter valve has channels configured to selectively put in communication the inlet conduit with the cup-shaped container and the filter cartridge or with the outlet conduit according to its position in a respective seat. The public document DE4411966 illustrates a filter provided with a by-pass line between an inlet and an outlet controlled by a blocking element. Opening the by-pass line, the blocking element closes the inlet to the filter chamber and at the same time closes the outlet from the filter chamber. In the by-pass line a diaphragm is installed with an opening that produces a pressure loss corresponding to that generated when the filter is dirty.

The public document DE102010005459 illustrates a valve provided with an inlet and an outlet in which a water treatment device can be connected between the inlet and the outlet. The valve includes a ball with a central hole and a side opening. In an operative position of the ball, the water flows through the central hole into the water treatment device and, returning from it, returns to the conduit in an annular channel. While the valve is in the aforementioned operating position, a part of the water can be conveyed directly to the outlet without being treated in the device, so as to dilute the treated part and obtain a lower softening. This untreated part flows through the side opening in a deviation channel and is regulated through the relative position of two windows formed in respective adjustment sleeves.

In this context, the Applicant has noticed that most of the known water treatment devices, such as for example EP3332855 and DE4411966, do not provide a configuration in which a part of the water flow enters and passes through the filter and a part by-passes it.

The Applicant has perceived that this partitioning configuration, in which the inlet flow is divided into two, can be useful for maintaining a high outlet flow rate while simultaneously performing a partial water treatment. The Applicant has in fact noted that, if all the flow passes through the filter/separator of the treatment device, the load loss generated by this determines a limited outlet.

The Applicant has also noted that the valve described in DE102010005459, which allows a part of the water to be conveyed directly to the outlet without being treated in the device, is structurally complex and cumbersome. Moreover, the geometry and dimensions of the side opening and of the deviation channel of DE102010005459, which allow conveying said part of the water directly to the outlet, are such as to generate very high pressure losses, probably even greater than those generated in the treatment device.

The document DE 41 03 976 A1 illustrating a ball valve with four terminals is also known. The document FR 3 060 698 A1 which illustrates a multi-way connection valve for swimming pool circuits is also known.

### Object of the invention

It is therefore the object of the present invention to substantially solve at least one of the drawbacks and/or limitations of the previous solutions.

An object of the invention is to provide a distribution manifold which allows the flow that enters and that which bypasses the fluid treatment or user device to be divided in a controlled manner.

An object of the present invention is to provide a distribution manifold which allows obtaining a high flow rate of the fluid flowing from the manifold itself after the fluid has partially passed through the treatment or user device.

An object of the present invention is to provide a distribution manifold which is structurally simple and therefore compact and reliable.

One or more of the objects described above and others, which will become more apparent in the course of the following description, are substantially achieved by a distribution manifold for a fluid and/or by a treatment or user apparatus of a fluid according to the following description and/or to one or more of the appended claims.

### Summary of the invention

Aspects of the invention are described hereinafter.

In a first aspect, a distribution manifold for a fluid is provided, preferably a liquid, more preferably water, wherein the manifold comprises the features of claim 1.

Optionally, the first inlet, the connection opening and the second outlet are consecutively aligned along a common longitudinal axis and delimit a substantially rectilinear passage for the fluid that bypasses the treatment or user device of the fluid.

The term "calibrated passage section" means a passage section suitably sized to impart a given pressure drop to the fluid that passes through it, so as to divide the flow into predefined parts.

In a second aspect according to the 1st, a ratio between the calibrated passage section and a minimum passage section of the first conduit located downstream of the calibrated passage section is between 0.3 and 0.7, preferably between 0.4 and 0.6.

In a third aspect according to any of the preceding aspects, the valve can be positioned in a by-pass position in which it opens the connection opening and blocks or substantially blocks the passage of fluid between the first inlet and the first outlet, to bypass the treatment or user device of the fluid. The term "substantially blocks" means that this passage is blocked unless there are leaks due to leakage which can be avoided, for example with the use of gaskets.

In a 4th aspect according to any of the preceding aspects, the valve can be positioned in a closed position in which it prevents the passage of fluid through the connection opening and blocks the passage of fluid between the first inlet and the first outlet.

In a 5th aspect according to the 1st aspect, the ball valve can be rotated in the open position and/or in the partitioning position and/or in the by-pass position and/or in the closed position.

Preferably, the "clean" flow leaving the separator/filter is intended to be circulated in said heating or conditioning systems.

Further features and advantages will become more apparent from the detailed description of a preferred but non-exclusive embodiment of a distribution manifold according to the present invention.

### Brief description of the drawings

Such description is given hereinafter with reference to the accompanying drawings, provided only for illustrative and, therefore, non-limiting purposes, in which:

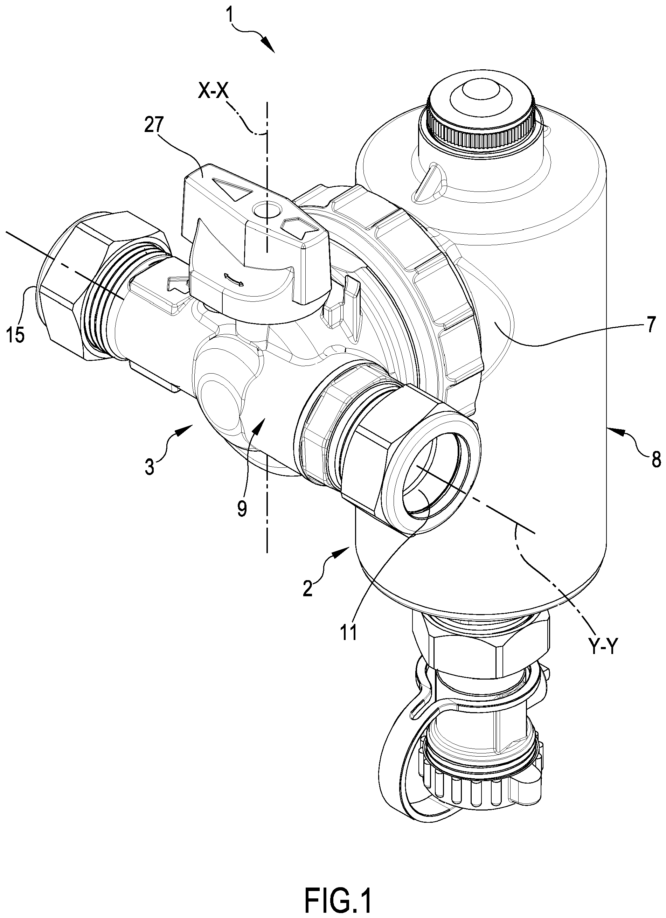

- figure 1 is a perspective view of a separator combined with a distribution manifold for a fluid according to the present invention;
- figure 2 is a cross-sectional view of the separator and the manifold of figure 1;
- figures 3 and 4 respectively show an external view and a cross-sectional view of the manifold according to the invention in a respective first operating configuration;
- figures 5 and 6 respectively show an external view and a cross-sectional view of the manifold according to the invention in a respective second operating configuration;
- figures 7 and 8 respectively show an external view and a cross-sectional view of the manifold according to the invention in a respective third operating configuration;
- figures 9 and 10 respectively show an external view and a cross-sectional view of the manifold according to the invention in a respective fourth operating configuration.

### Detailed description

With reference to the accompanying figures, the reference numeral 1 indicates a fluid treatment apparatus, for example usable in heating or conditioning systems, both for industrial and domestic use. The fluid treatment apparatus 1 comprises a treatment or user device 2 of the fluid defined, in the illustrated embodiment, by a particle separator and by a distribution manifold 3 coupled to the separator 2.

The separator 2 can be a hydro-cyclone filter. The separator 2 is of the type, for example, described in the document EP3150266, on behalf of the same Applicant, and is configured to receive a fluid in crossing, in particular a liquid (such as water), and treat it so as to allow the effective separation of solid particles from the flow of fluid that passes through the separator 2 to define at the outlet a "clean" liquid flow: the "clean" flow leaving the separator 2 is destined to be circulated in said heating or conditioning systems. For example, the separator 2 is configured to separate at least a part of the solid particles from the fluid flow by mechanical effect and/or, for solid ferromagnetic particles, magnetic effect.

The separator 2 will not be described in greater detail herein but only with reference to the technical features necessary to explain the structure and operation of the distribution manifold 3.

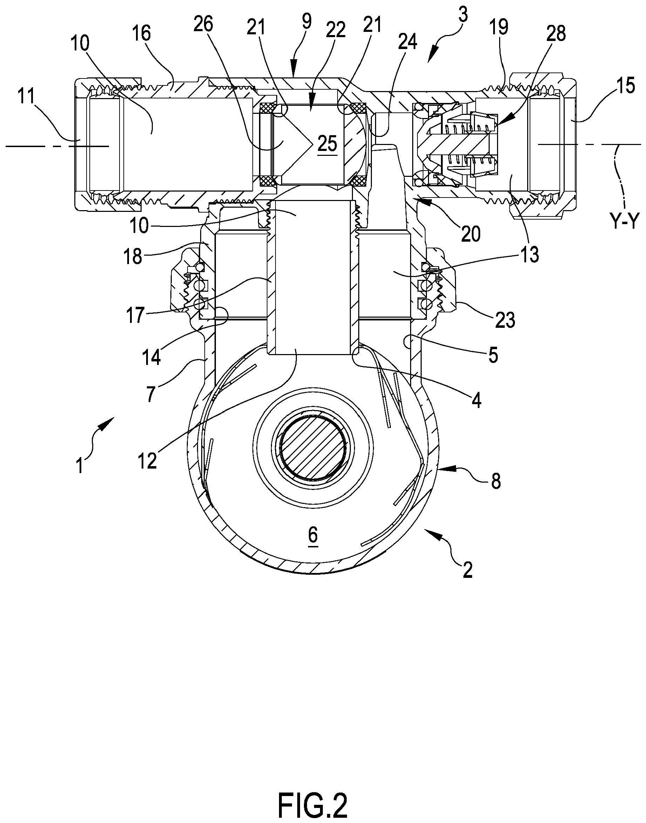

As shown in figure 2, the separator 2 comprises an inlet 4 for a fluid to be treated and an outlet 5 for the treated fluid. The inlet 4 allows the fluid to enter the separator 2, for example in a chamber 6 and/or through a filter and/or one or more paths for the fluid. The outlet 5 allows the outlet of the treated fluid, after it has passed through the separator 2, or in the chamber 6 and/or through the filter and/or the aforementioned paths. The inlet 4 and the outlet 5 of the separator 2 are coaxial with respect to each other. The outlet 5 is delimited by a tubular portion 7 threaded externally of an outer casing 8 of the separator 2. The tubular portion 7 surrounds the inlet 4.

The distribution manifold 3 comprises a containment body 9 made of metallic material, for example using at least one material selected from the group of the following materials: steel, brass, bronze, copper and alloys thereof, aluminum and alloys thereof. In embodiments not shown, the containment body 9 can be made of other materials, such as plastic. The containment body 9 internally defines a first conduit 10 having a respective first inlet 11 and a respective first outlet 12, a second conduit 13 having a respective second inlet 14 and a respective second outlet 15. The first outlet 12 and the second inlet 14 are configured to be connected respectively to the inlet 4 and to the outlet 5 of the separator 2 (figure 2).

The containment body 9 comprises a first tubular body 16 which internally delimits a first section of the first conduit 10 and a second tubular body 17 which delimits a second section of the first conduit 10 and is arranged perpendicular to the first tubular body 16. A third tubular body 18 delimits a first section of the second conduit 13 and coaxially surrounds the second tubular body 17. A fourth tubular body 19 delimits the second section of the second conduit 13 and is arranged perpendicular to the third tubular body 18. The first section of the second conduit 13 is radially comprised between the third tubular body 18 and the fourth tubular body 19. The first tubular body 16 and the fourth tubular body 19 are consecutively aligned along a common longitudinal axis "Y-Y".

The containment body 9 therefore has a T-shape as a whole. The first inlet 11 and the second outlet 15 are located along said longitudinal axis "Y-Y". The first outlet 12 and the second inlet 14 are located on an axis perpendicular to the longitudinal axis "Y-Y".

In the illustrated embodiment, the illustrated containment body 9 comprises a single piece portion which comprises the third tubular body 18, the fourth tubular body 19 and an inner body 20 which partly delimits a seat 21 for a valve 22. The inner body 20 and said part of the seat 21 belong to the first conduit 10 and are located at an elbow of the first conduit 10 located between the first section and the second section. In the non-limiting embodiment illustrated, the first tubular body 16 and the second tubular body 17 are elements distinct from the one-piece portion and are screwed onto the containment body 9. The first tubular body 16 defines a further part of the seat 21 of the valve 22 inside the containment body 9. One end of the second tubular body 17 defining the first outlet 12 protrudes beyond the second inlet 14, i.e. beyond the third tubular body 18. A ring nut 23 is rotatably mounted around the third tubular body 18 and is configured to connect the distribution manifold 3 to the separator 2. The ring nut 23 is internally threaded and engages with the tubular portion 7 threaded externally of the separator 2 to connect the manifold 3 to the separator 2 (figure 2). When the manifold 3 is mounted on the separator 2, the third tubular body 18 is abutted to the tubular portion 7, the first section of the second conduit 13 is in fluid communication with the outlet 5 of the separator 2 and the second section of the first conduit 10 is in fluid communication with the inlet 4 of the separator 2. The first inlet 11 and the second outlet 15 are for example connected to the water mains and constitute the inlet and outlet of the fluid treatment apparatus 1. The fluid that enters through the first inlet 11 exits through the second outlet 15 passing completely or partially through the separator 2, as will be detailed later.

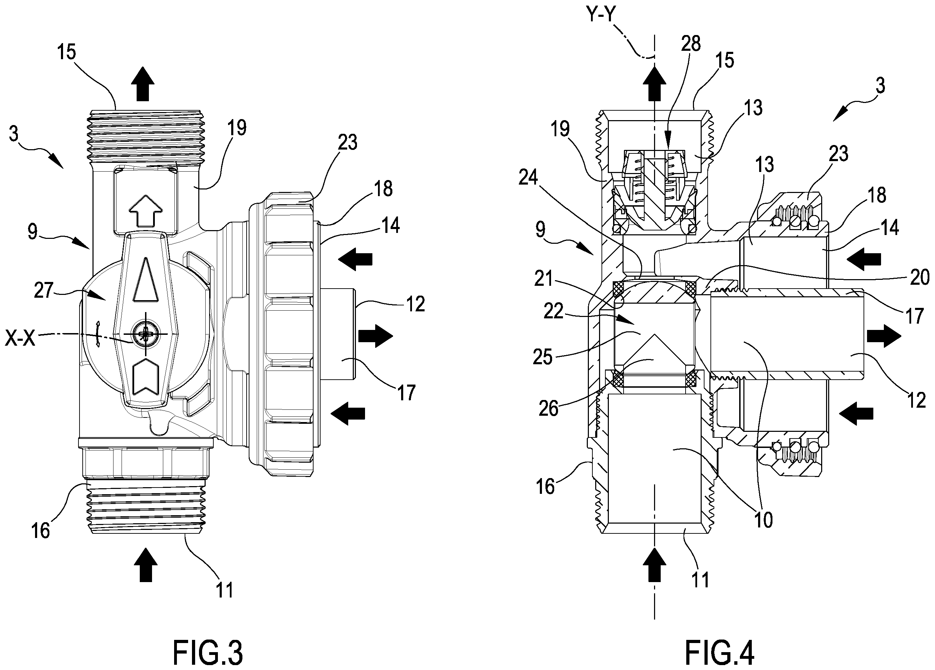

In a sectional view like those of figures 4, 6, 8 and 10, the seat 21 has three open sides. The seat 21 has an opening towards the first inlet 11 and an opening towards the first outlet 12. Moreover, the seat 21 has a connection opening 24 between the first conduit 10 and the second conduit 13 which is located on a wall of the inner body 20 opposite to the opening towards the second outlet 15. One side of the seat 21 opens into the connection opening 24. The connection opening 24 has a calibrated passage section which is made with the purpose of throttling the conduit, to distribute/divide the fluid entering through the first inlet 11 in a controlled manner when the valve 22 is in a determined operating position.

The valve 22 is of the ball type and has an internal T-shaped cavity such as to define three ways. The internal cavity comprises a diametral through hole 25 and a side hole 26 which opens into the diametral through hole 25. The diametral through hole 25 has a constant passage section and is greater than or equal to the calibrated passage section. The side hole 26 has a constant passage section substantially equal to or slightly less than that of the diametral through hole 25.

The cross-section of the diametral through hole 25 is for example of about 177 mm² (15 mm diameter). The section of the side hole 26 is for example of 154 mm² (14 mm diameter). The calibrated passage section is about 71 mm² (9.5 mm diameter). A ratio between the calibrated passage section and the side hole section 26 is about 0.4. A passage section of the first section of the first conduit 10 is for example about 380 mm² (22 mm diameter). A passage section of the second section of the first conduit 10 is for example about 254 mm² (18 mm diameter). A passage section of the first section of the second conduit 13 is for example about 1282 mm² (annular section with an inner diameter of 22 mm and an outer diameter of 46 mm). A passage section of the second section of the second conduit 13 at the passage opening 24 is for example about 177 mm² (15 mm diameter) and at the second outlet 15 is for example about 380 mm² (22 mm diameter).

The ball valve 22 can be rotated around a respective rotation axis "X-X" for example manually using an external knob 27. The ball valve 22 can be rotated between an open position, a by-pass position, a closed position and a partitioning position. Each of the above positions corresponds to an operational configuration of the manifold 1.

In the open position illustrated in figures 3 and 4, the valve 22 closes the connection opening 24 and puts the first inlet 11 in communication with the first outlet 12, to convey all the fluid entering through the first inlet 11 into the separator 2. In this position, the diametral through hole 25 has a first end closed by a wall of the containment body 9 and a second end facing the first outlet 12 of the first conduit 10 while the side hole 26 has its own end facing the first inlet 11 of the first conduit 10. In particular, a side wall of the valve 22 closes the connection opening 24. All the flow of fluid that enters through the first inlet 11 passes through the first conduit 10 and from there enters the separator 2. The fluid then exits from the separator 2, enters the second conduit 13 and exits from the second outlet 15.

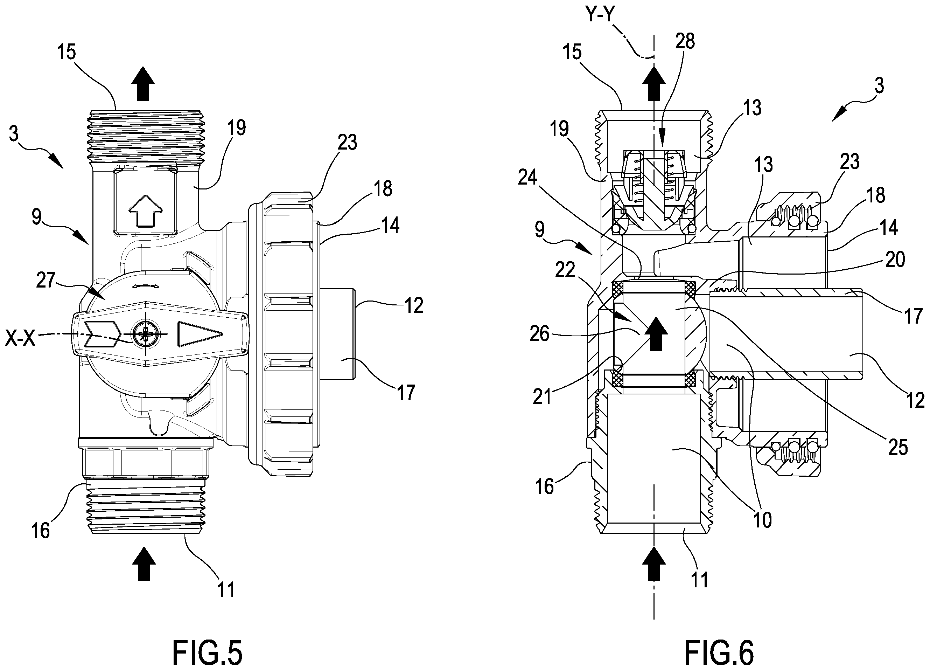

By turning the knob 27 clockwise by an angle of 90°, the valve 22 is brought to the by-pass position (figures 5 and 6). In this position, the valve 22 opens the connection opening 24 and substantially blocks the passage of fluid between the first inlet 11 and the first outlet 12. The diametral through hole 25 has the first end facing the connection opening 24 and the second end facing the first inlet 11 of the first conduit 10 while the side hole 26 has its own end substantially closed by a wall of the containment body 9. In fact, between the wall of the containment body 9 and said end of the side hole 26 it is possible that the fluid leaks flowing around the ball valve 22 and then into the filter in a minimum and negligible quantity. The aforementioned side wall of the valve 22 substantially blocks the passage between the first inlet 11 and the first outlet 12. All the fluid flow, except for the aforementioned leaks, which enters through the first inlet 11 passes through the connection opening 24 and exits from the second outlet 15, substantially bypassing the separator 2. The first inlet 11, the connection opening 24 and the second outlet 15 are consecutively aligned along the common longitudinal axis "Y-Y" and delimit a substantially rectilinear passage for the fluid that bypasses the separator 2.

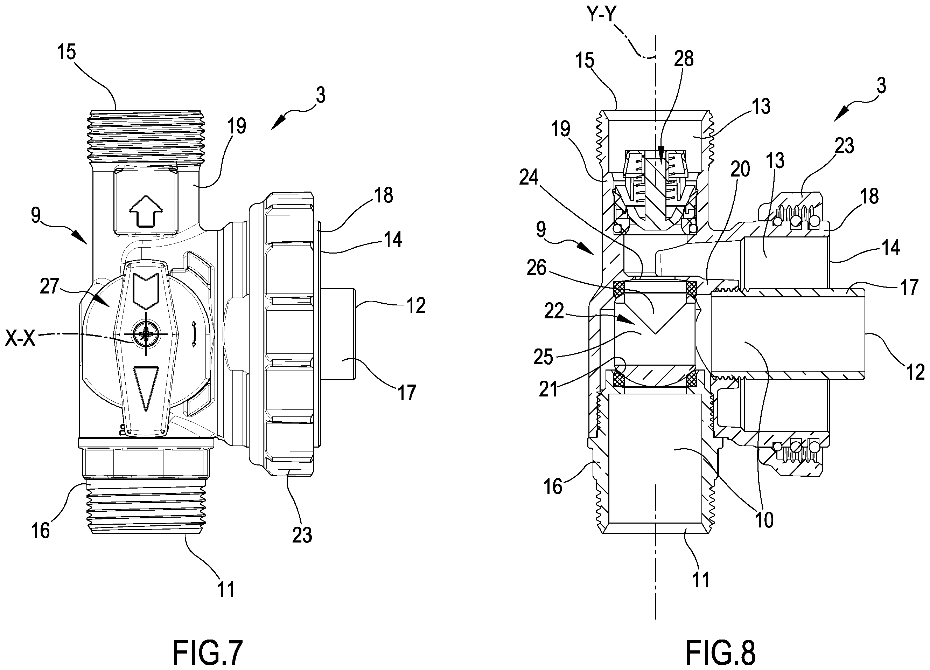

By further rotating the knob 27 clockwise by an angle of 90°, the valve 22 is brought to the closed position (figures 7 and 8). In this position, the valve 22 prevents the passage of fluid through the connection opening 24 and also blocks the passage of fluid between the first inlet 11 and the first outlet 12. The diametral through hole 25 has the first end facing the first outlet 12 of the first conduit 10 and the second end closed by a wall of the containment body 9 while the side hole 25 has its own end facing the connection opening 24. The side wall of the valve 22 blocks the passage of fluid between the first inlet 11 and the first outlet 12 of the first conduit 10. The fluid present at the first inlet 11 cannot flow through the distribution manifold 3 or even through the separator 2.

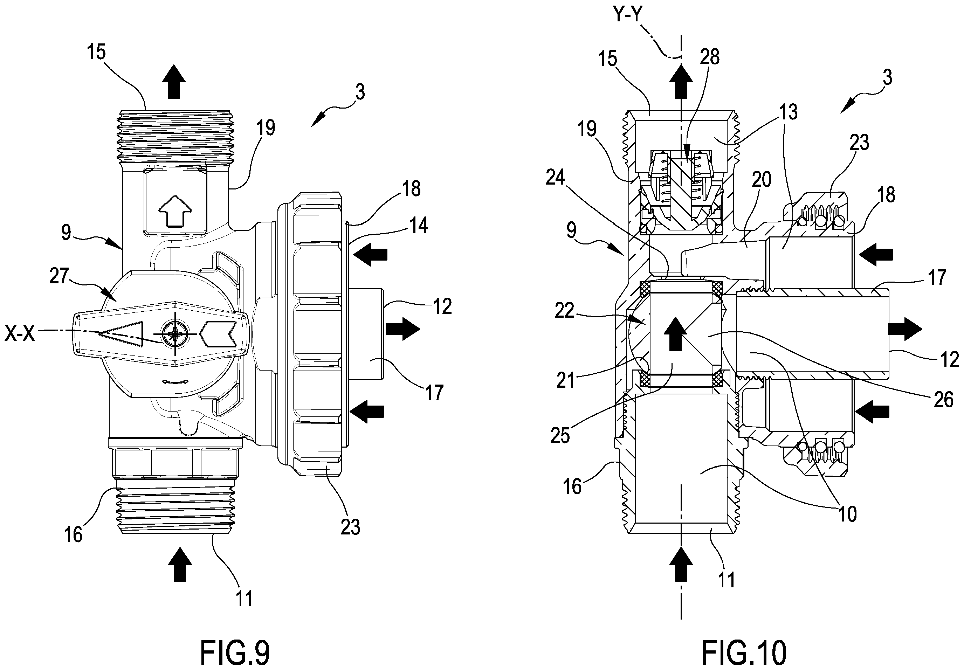

By further rotating the knob 27 clockwise by an angle of 90°, the valve 22 is brought to the partitioning position (figures 9 and 10). In this position, the valve 22 opens the connection opening 24 and also puts in fluid communication the first inlet 11 with the first outlet 12, so that a first part of the fluid entering through the first inlet 11 bypasses the separator 2 transiting through the connection opening 24 while a second part of the fluid entering through the first inlet 11 enters and passes through the separator 2. In the partitioning position, the diametral through hole 25 has the first end facing the first inlet 11 of the first conduit 10 and the second end facing the connection opening 24, while the side hole 25 has its own end facing the first outlet 12 of the first conduit 10. The first inlet 11, the connection opening 24 and the second outlet 15 are consecutively aligned along the common longitudinal axis "Y-Y" and delimit a substantially rectilinear passage for the first part of the fluid that bypasses the separator 2.

In the partitioning position, the first part of the fluid passes through the calibrated passage section and the second part of the fluid passes through the side hole 26 and then in the second section of the first conduit 10 before reaching the separator 2. The side hole 26 defines a minimum passage section of the first conduit 10 located downstream of the calibrated passage section (with respect to a direction of advancement of the fluid in the first conduit 10). A ratio between the calibrated passage section and this minimum passage section of the first conduit 10 located downstream of the calibrated passage section is about 0.4. By properly sizing the calibrated passage section and the aforementioned minimum passage section, it is possible to set the percentage of fluid that bypasses the separator 2 and the one that passes through it.

A non-return valve 28 is placed in the second conduit 13 and downstream of the connection opening 24 and is oriented to prevent the reflux of fluid coming from the second outlet 15 of the second conduit 13.

### Advantages of the invention

The present invention allows overcoming the limitations and drawbacks of the prior art and allows achieving appreciable advantages.

The distribution manifold according to the invention allows first of all dividing in a controlled manner the flow that enters and that which bypasses the treatment or user device 2 of the fluid in a relatively simple manner, by sizing the calibrated passage section.

The distribution manifold 3 according to the invention is structurally simple and therefore also relatively cost-effective, reliable and compact. In fact, the single valve 22 allows the manifold 3 to assume the different configurations without the need for additional devices.

Moreover, the in-line arrangement of the first inlet 11 and the second outlet 15 of the manifold 3 and/or the T-shape of the containment body 9 allow easy installation of the manifold 3 itself and/or of the treatment or user device 2. If this device 2 is a hydro-cyclonic filter as shown in the accompanying figures, the manifold 3 allows vertically orienting said hydro-cyclone filter 2 whatever the orientation of the water pipe so as to allow the filter to function correctly (i.e. allow the gravity drop of the particles drawn by the fluid).

The distribution manifold 3 according to the invention allows obtaining a high flow rate of the fluid flow coming out of the manifold itself after the fluid has partly passed through the treatment or user device and partly has bypassed said device. In fact, by partially bypassing the treatment or user device, it is possible to obtain a higher flow rate than when all the flow passes through the treatment or user device. In this regard, the proper sizing of the calibrated passage section and the substantially straight path of the fluid that bypasses the treatment or user device allow limiting the pressure drops of the first part of the fluid (bypass).

## Claims

1. Distribution manifold for a fluid, comprising:
a containment body (9) internally delimiting a first conduit (10) having a respective first inlet (11) and a respective first outlet (12), a second conduit (13) having a respective second inlet (14) and a respective second outlet (15), a connection opening (24) between the first conduit (10) and the second conduit (13); wherein the first outlet (12) and the second inlet (14) are configured to be connected respectively to an inlet (4) and to an outlet (5) of a treatment or user device (2) of the fluid, preferably to a filter;
a valve (22) operatively active in the first conduit (10) and on the connection opening (24); wherein the valve (22) can be positioned in an open position, in which it closes the connection opening (24) and puts in fluid communication the first inlet (11) with the first outlet (12) to convey all the fluid entering through the first inlet (11) into the treatment or user device (2), and in a partitioning position other than the open position;
wherein, in the partitioning position, the valve (22) opens the connection opening (24) and also puts in fluid communication the first inlet (11) with the first outlet (12), so that a first part of the fluid entering through the first inlet (11) bypasses the treatment or user device (2) and a second part of the fluid entering through the first inlet (11) passes through the treatment or user device (2);
wherein the valve (24) is a ball valve and can be rotated between the open and partitioning positions; wherein the ball valve (24) has an internal T-shaped cavity comprising a diametral through-hole (25) and a side hole (26) which opens into the diametral through-hole (25);
wherein the connection opening (24) has a calibrated passage section for distributing the inlet fluid in a controlled manner through the first inlet (11) between the first part and the second part when the valve (22) is in said partitioning position.

2. A manifold according to claim 1, wherein a ratio between the calibrated passage section of the connection opening (24) and a minimum passage section of the first conduit (10) located downstream of the calibrated passage section is between 0.3 and 0.7, optionally between 0.4 and 0.6.

3. A manifold according to claim 1 or 2, wherein the first inlet (11), the connection opening (24) and the second outlet (15) are consecutively aligned along a common longitudinal axis (Y-Y) and delimit a substantially rectilinear passage for the fluid that bypasses the treatment or user device (2).

4. A manifold according to claim 1 or 2 or 3, wherein the ball valve (22) can be positioned: in a by-pass position in which it opens the connection opening (24) and substantially blocks the passage of fluid between the first inlet (11) and the first outlet (12), to bypass the treatment or user device (2).

5. A manifold according to claim 4, wherein the ball valve (22) can be positioned: in a closed position in which it prevents the passage of fluid through the connection opening (24) and blocks the passage of fluid between the first inlet (11) and the first outlet (12).

6. A manifold according to claim 4, wherein the ball valve (22) is rotatable between the open, partitioning, by-pass and closed positions.

7. A manifold according to one of claims 1 to 6, wherein the diametral through-hole (25) has a passage section greater than or equal to the calibrated passage section.

8. A manifold according to claim 7, wherein the side hole (26) delimits a minimum passage section of the first conduit (10) located downstream of the calibrated passage section.

9. A manifold according to one of claims 1 to 8, wherein in the partitioning position the diametral through-hole (25) has a first end facing the first inlet (11) of the first conduit (10) and a second end facing the connection opening (24); wherein the side hole (26) has its own end facing the first outlet (12) of the first conduit (10).

10. A manifold according to one of claims 1 to 9, wherein in the open position the diametral through-hole (25) has a first end closed by a wall of the containment body (9) and a second end facing the first outlet (12) of the first conduit (10); wherein the side hole (26) has its own end facing the first inlet (11) of the first conduit (10); wherein a side wall of the ball valve (22) closes the connection opening (24).

11. A manifold according to claim 6, wherein in the by-pass position the diametral through-hole (25) has a first end facing the connection opening (24) and a second end facing the first inlet (11) of the first conduit (10); wherein the side hole (26) has its own end substantially closed by a wall of the containment body (9); wherein a side wall of the ball valve (22) substantially blocks the passage between the first inlet (11) and the first outlet (12) of the first conduit (10).

12. A manifold according to claim 6, wherein, in the closed position, the diametral through-hole (25) has a first end facing the first outlet (12) of the first conduit (10) and a second end closed by a wall of the containment body (9); wherein the side hole (26) has its own end facing the connection opening (24); wherein a side wall of the ball valve (22) blocks the passage of fluid between the first inlet (11) and the first outlet (12) of the first conduit (10).

13. A manifold according to one of the preceding claims 1 to 12, wherein the containment body (9) delimits a seat (21) for the ball valve (22) arranged in the first conduit (10); wherein one side of the seat (21) opens into the connection opening (24).

14. A manifold according to one of the preceding claims 1 to 13, comprising an external element (27) connected to the ball valve (22) to rotate it manually or with a tool.

15. A fluid treatment apparatus, comprising:
a treatment or user device (2) of a fluid, optionally a filter, having an inlet (4) and an outlet (5);
a distribution manifold (3) according to at least one of the claims 1 to 14;
wherein the first outlet (12) and the second inlet (14) of the distribution manifold (3) are connected or connectable to the inlet (4) and to the outlet (5) of the treatment or user device (2) of the fluid.

## Patentansprüche

1. Verteilungsleitungsverzweigung für ein Fluid, umfassend:
einen Behälterkörper (9), welcher innen eine erste Leitung (10) mit einem jeweiligen ersten Einlass (11) und einem jeweiligen ersten Auslass (12), eine zweite Leitung (13) mit einem jeweiligen zweiten Einlass (14) und einem jeweiligen zweiten Auslass (15) und eine Verbindungsöffnung (24) zwischen der ersten Leitung (10) und der zweiten Leitung (13) begrenzt; wobei der erste Auslass (12) und der zweite Auslass (14) dazu eingerichtet sind, jeweils mit einem Einlass (4) und einem Auslass (5) einer Aufbereitungs- oder Nutzervorrichtung (2) des Fluids, vorzugsweise einem Filter, verbunden zu sein;
ein Ventil (22), welches betriebsmäßig in der ersten Leitung (10) und an der Verbindungsöffnung (24) wirksam ist; wobei das Ventil (22) in einer Öffnungsposition, in welcher es die Verbindungsöffnung (24) verschließt und den ersten Einlass (11) mit dem ersten Auslass (12) in Fluidverbindung versetzt, um all das Fluid, welches durch den ersten Einlass (11) eintritt in die Aufbereitungs- oder Nutzervorrichtung (2) zu leiten, und in einer Unterteilungsposition positioniert werden kann, welche sich von der Öffnungsposition unterscheidet;
wobei, in der Unterteilungsposition, das Ventil (22) die Verbindungsöffnung (24) öffnet und ebenfalls den ersten Einlass (11) mit dem ersten Auslass (12) in Fluidverbindung versetzt, so dass ein erster Teil des Fluids, welcher durch den ersten Einlass (11) eintritt, an der Aufbereitungs- oder Nutzervorrichtung (2) vorbei geleitet wird, und ein zweiter Teil des Fluids, welcher durch den ersten Einlass (11) eintritt, durch die Aufbereitungs- oder Nutzervorrichtung (2) hindurch geleitet wird,
wobei das Ventil (24) ein Kugelventil ist und zwischen der Öffnungsposition und der Unterteilungsposition rotiert werden kann; wobei das Kugelventil (24) einen inneren T-förmigen Hohlraum aufweist, welcher ein diametrales Durchgangsloch (25) und ein seitliches Loch (26) umfasst, welches in das diametrale Durchgangsloch (25) mündet;
wobei die Verbindungsöffnung (24) einen kalibrierten Durchgangsabschnitt zum Verteilen des Einlassfluids in einer gesteuerten Art und Weise durch den ersten Einlass (11) zwischen dem ersten Teil und dem zweiten Teil aufweist, wenn sich das Ventil (22) in der Unterteilungsposition befindet.

2. Leitungsverzweigung nach Anspruch 1, wobei ein Verhältnis zwischen dem kalibrierten Durchgangsabschnitt der Verbindungöffnung (24) und einem minimalen Durchgangsabschnitt der ersten Leitung (10), welcher stromabwärts des kalibrierten Durchgangsabschnitts angeordnet ist, zwischen 0,3 und 0,7, optional zwischen 0,4 und 0,6, liegt.

3. Leitungsverzweigung nach Anspruch 1 oder 2, wobei der erste Einlass (11), die Verbindungsöffnung (24) und der zweite Auslass (15) nacheinander entlang einer gemeinsamen longitudinalen Achse (Y-Y) ausgerichtet sind und einen im Wesentlichen rechteckigen Durchgang für das Fluid begrenzen, welches an der Aufbereitungs- oder Nutzervorrichtung (2) vorbei geleitet wird.

4. Leitungsverzweigung nach Anspruch 1 oder 2 oder 3, wobei das Kugelventil (22) positioniert sein kann: in einer Bypass-Position, in welcher es die Verbindungsöffnung (24) öffnet und den Durchgang von Fluid zwischen dem ersten Einlass (11) und dem ersten Auslass (12) im Wesentlichen blockiert, um an der Aufbereitungs- oder Nutzervorrichtung (2) vorbei zu leiten.

5. Leitungsverzweigung nach Anspruch 4, wobei das Kugelventil (22) positioniert sein kann: in einer geschlossenen Position, in welcher es den Durchgang von Fluid durch die Verbindungsöffnung (24) verhindert und den Durchgang von Fluid zwischen dem ersten Einlass (11) und dem ersten Auslass (12) blockiert.

6. Leitungsverzweigung nach Anspruch 4, wobei das Kugelventil (22) zwischen der Öffnungs-, der Unterteilungs-, der Bypass- und der geschlossenen Position rotierbar ist.

7. Leitungsverzweigung nach einem der Ansprüche 1 bis 6, wobei das diametrale Durchgangsloch (25) einen Durchgangsabschnitt aufweist, welcher größer als oder gleich wie der kalibrierte Durchgangsabschnitt ist.

8. Leitungsverzweigung nach Anspruch 7, wobei das seitliche Loch (26) einen minimalen Durchgangsabschnitt der ersten Leitung (10) begrenzt, welcher stromabwärts des kalibrierten Durchgangsabschnitts angeordnet ist.

9. Leitungsverzweigung nach einem der Ansprüche 1 bis 8, wobei in der Unterteilungsposition das diametrale Durchgangsloch (25) ein erstes Ende, welches dem ersten Einlass (11) der ersten Leitung (10) zugewandt ist, und ein zweites Ende aufweist, welches der Verbindungsöffnung (24) zugewandt ist; wobei das seitliche Loch (26) sein eigenes Ende aufweist, welches dem ersten Auslass (12) der ersten Leitung (10) zugewandt ist.

10. Leitungsverzweigung nach einem der Ansprüche 1 bis 9, wobei in der Öffnungsposition das diametrale Durchgangsloch (25) ein erstes Ende, welches durch eine Wand des Behälterkörpers (9) geschlossen ist, und ein zweites Ende aufweist, welches dem ersten Auslass (12) der ersten Leitung (10) zugewandt ist; wobei das seitliche Loch (26) sein eigenes Ende aufweist, welches dem ersten Einlass (11) der ersten Leitung (10) zugewandt ist; wobei eine Seitenwand des Kugelventils (22) die Verbindungsöffnung (24) verschließt.

11. Leitungsverzweigung nach Anspruch 6, wobei in der Bypass-Position das diametrale Durchgangsloch (25) ein erstes Ende, welches der Verbindungsöffnung (24) zugewandt ist, und ein zweites Ende aufweist, welches dem ersten Einlass (11) der ersten Leitung (10) zugewandt ist; wobei das seitliche Loch (26) sein eigenes Ende aufweist, welches im Wesentlichen durch eine Wand des Behälterkörpers (9) geschlossen ist; wobei eine Seitenwand des Kugelventils (22) den Durchgang zwischen dem ersten Einlass (11) und dem ersten Auslass (12) der ersten Leitung (10) im Wesentlichen blockiert.

12. Leitungsverzweigung nach Anspruch 6, wobei in der geschlossenen Position, das diametrale Durchgangsloch (25) ein erstes Ende, welches dem ersten Auslass (12) der ersten Leitung (10) zugewandt ist, und ein zweites Ende aufweist, welches durch eine Wand des Behälterkörpers (9) verschlossen ist; wobei das seitliche Loch (26) sein eigenes Ende aufweist, welches der Verbindungöffnung (24) zugewandt ist; wobei eine Seitenwand des Kugelventils (22) den Durchgang von Fluid zwischen dem ersten Einlass (11) und dem ersten Auslass (12) der ersten Leitung (10) blockiert.

13. Leitungsverzweigung nach einem der vorhergehenden Ansprüche 1 bis 12, wobei der Behälterkörper (9) einen Sitz (21) für das Kugelventil (22) begrenzt, welcher in der ersten Leitung (10) angeordnet ist; wobei eine Seite des Sitzes (21) in die Verbindungöffnung (24) mündet.

14. Leitungsverzweigung nach einem der vorhergehenden Ansprüche 1 bis 13, umfassend ein externes Element (27), welches mit dem Kugelventil (22) verbunden ist, um es manuell oder mit einem Werkzeug zu rotieren.

15. Fluidaufbereitungsvorrichtung, umfassend
eine Aufbereitungs- oder Nutzervorrichtung (2) eines Fluids, optional einen Filter, welche/welcher einen Einlass (4) und einen Auslass (5) aufweist;
eine Verteilungsleitungsverzweigung (3) nach wenigstens einem der Ansprüche 1 bis 14;
wobei der erste Auslass (12) und der zweite Einlass (14) der Verteilungsleitungsverzweigung (3) mit dem Einlass (4) und dem Auslass (5) der Aufbereitungs- oder Nutzervorrichtung (2) des Fluids verbunden oder verbindbar sind.

## Revendications

1. Rampe de distribution pour un fluide, comprenant :
un corps de confinement (9) délimitant au plan interne une première conduite (10) ayant un premier orifice d'entrée (11) respectif et un premier orifice de sortie (12) respectif, une seconde conduite (13) ayant un second orifice d'entrée (14) respectif et un second orifice de sortie (15) respectif, une ouverture de raccordement (24) entre la première conduite (10) et la seconde conduite (13) ; le premier orifice de sortie (12) et le second orifice d'entrée (14) étant conçus pour être raccordés respectivement à un orifice d'entrée (4) et à un orifice de sortie (5) d'un dispositif de traitement ou utilisateur (2) du fluide, préférablement à un filtre ;
une soupape (22) fonctionnellement active dans la première conduite (10) et sur l'ouverture de raccordement (24) ; la soupape (22) pouvant être positionnée en une position ouverte, dans laquelle elle ferme l'ouverture de raccordement (24) et place en communication fluidique le premier orifice d'entrée (11) avec le premier orifice de sortie (12) pour transporter tout le fluide entrant à travers le premier orifice d'entrée (11) dans le dispositif de traitement ou utilisateur (2), et en une position de partitionnement autre que la position ouverte ;
dans la position de partitionnement, la soupape (22) ouvre l'ouverture de raccordement (24) et place également en communication fluidique le premier orifice d'entrée (11) avec le premier orifice de sortie (12), de sorte qu'une première partie du fluide entrant à travers le premier orifice d'entrée (11) contourne le dispositif de traitement ou utilisateur (2) et qu'une seconde partie du fluide entrant à travers le premier orifice d'entrée (11) passe à travers le dispositif de traitement ou utilisateur (2) ;
la soupape (24) étant une soupape à bille et pouvant être mise en rotation entre les positions ouverte et de partitionnement ; la soupape à bille (24) ayant une cavité interne en forme de T comprenant un trou traversant dans le diamètre (25) et un trou latéral (26) qui s'ouvre dans le trou traversant dans le diamètre (25) ;
l'ouverture de raccordement (24) ayant une section de passage calibrée pour la distribution du fluide d'entrée d'une manière contrôlée à travers le premier orifice d'entrée (11) entre la première partie et la seconde partie lorsque la soupape (22) se trouve dans ladite position de partitionnement.

2. Rampe selon la revendication 1, un rapport entre la section de passage calibrée de l'ouverture de raccordement (24) et une section de passage minimale de la première conduite (10) localisée en aval de la section de passage calibrée étant compris entre 0,3 et 0,7, éventuellement entre 0,4 et 0,6.

3. Rampe selon la revendication 1 ou 2, le premier orifice d'entrée (11), l'ouverture de raccordement (24) et le second orifice de sortie (15) étant alignés consécutivement le long d'un axe longitudinal commun (Y-Y) et délimitant un passage sensiblement rectiligne pour le fluide qui contourne le dispositif de traitement ou utilisateur (2).

4. Rampe selon la revendication 1 ou 2 ou 3, la soupape à bille (22) pouvant être positionnée : dans une position de contournement dans laquelle elle ouvre l'ouverture de raccordement (24) et bloque sensiblement le passage du fluide entre le premier orifice d'entrée (11) et le premier orifice de sortie (12), pour contourner le dispositif de traitement ou utilisateur (2).

5. Rampe selon la revendication 4, la soupape à bille (22) pouvant être positionnée : dans une position fermée dans laquelle elle empêche le passage du fluide à travers l'ouverture de raccordement (24) et bloque le passage du fluide entre le premier orifice d'entrée (11) et le premier orifice de sortie (12).

6. Rampe selon la revendication 4, la soupape à bille (22) pouvant tourner entre les positions ouverte, de partitionnement, de contournement et fermée.

7. Rampe selon l'une des revendications 1 à 6, le trou traversant dans le diamètre (25) ayant une section de passage supérieure ou égale à la section de passage calibrée.

8. Rampe selon la revendication 7, le trou latéral (26) délimitant une section de passage minimale de la première conduite (10) localisée en aval de la section de passage calibrée.

9. Rampe selon l'une des revendications 1 à 8, dans la position de partitionnement le trou traversant dans le diamètre (25) ayant une première extrémité faisant face au premier orifice d'entrée (11) de la première conduite (10) et une seconde extrémité faisant face à l'ouverture de raccordement (24) ; le trou latéral (26) ayant sa propre extrémité faisant face au premier orifice de sortie (12) de la première conduite (10).

10. Rampe selon l'une des revendications 1 à 9, dans la position ouverte le trou traversant dans le diamètre (25) ayant une première extrémité fermée par une paroi du corps de confinement (9) et une seconde extrémité faisant face au premier orifice de sortie (12) de la première conduite (10) ; le trou latéral (26) ayant sa propre extrémité faisant face au premier orifice d'entrée (11) de la première conduite (10) ; une paroi latérale de la soupape à bille (22) fermant l'ouverture de raccordement (24).

11. Rampe selon la revendication 6, dans la position de contournement le trou traversant dans le diamètre (25) ayant une première extrémité faisant face à l'ouverture de raccordement (24) et une seconde extrémité faisant face au premier orifice d'entrée (11) de la première conduite (10) ; le trou latéral (26) ayant sa propre extrémité sensiblement fermée par une paroi du corps de confinement (9) ; une paroi latérale de la soupape à bille (22) bloquant sensiblement le passage entre le premier orifice d'entrée (11) et le premier orifice de sortie (12) de la première conduite (10).

12. Rampe selon la revendication 6, dans la position fermée, le trou traversant dans le diamètre (25) ayant une première extrémité faisant face au premier orifice de sortie (12) de la première conduite (10) et une seconde extrémité fermée par une paroi du corps de confinement (9) ; le trou latéral (26) ayant sa propre extrémité faisant face à l'ouverture de raccordement (24) ; une paroi latérale de la soupape à bille (22) bloquant le passage du fluide entre le premier orifice d'entrée (11) et le premier orifice de sortie (12) de la première conduite (10).

13. Rampe selon l'une des revendications précédentes de 1 à 12, le corps de confinement (9) délimitant un siège (21) pour la soupape à bille (22) disposée dans la première conduite (10) ; un côté du siège (21) s'ouvrant dans l'ouverture de raccordement (24).

14. Rampe selon l'une des revendications précédentes de 1 à 13, comprenant un élément externe (27) raccordé à la soupape à bille (22) pour la faire tourner manuellement ou avec un outil.

15. Appareil de traitement d'un fluide, comprenant :
un dispositif de traitement ou utilisateur (2) d'un fluide, éventuellement un filtre, ayant un orifice d'entrée (4) et un orifice de sortie (5) ;
une rampe de distribution (3) selon au moins l'une des revendications 1 à 14;
le premier orifice de sortie (12) et le second orifice d'entrée (14) de la rampe de distribution (3) étant raccordés ou pouvant être raccordés à l'orifice d'entrée (4) et à l'orifice de sortie (5) du dispositif de traitement ou utilisateur (2) du fluide.
